# EUROPEAN PATENT APPLICATION

(11) **EP 0 594 527 A1**
(43) Date of publication of application: **27.04.1994**
(21) Application number: 93500146.1
(22) Date of filing: 21.10.1993
(51) Int. Cl.: B60N 2/22

(54) **A mechanism for adjusting the reclination of a vehicle seat backrest**

(30) Priority: 22.10.1992 ES 9202114
(71) Applicant: INDUSTRIAS ESTEBAN, S.A., E-31012 Pamplona (Navarra) (ES)
(72) Inventor: Remacha Indurain, Angel, Pamplona, (Navarra) (ES)
(74) Representative: Carpintero Lopez, Francisco

(57) **Abstract**

The mechanism is applicable to backrest structures comprising two portions, a lower portion (1) and a top portion (2) hinged to one another. The lower portion has a side rod divided into two sectors (8-8') hinged to each other, the top sector being attached to the hinge elements of the top part (2) and the lower sector to the elements hinging the same to the framework (4) as such of the seat. The mechanism has two gas springs (14) and (17) assembled such that the same are released when the manual lever (16) is driven, allowing the user to recline the backrest (1) with his or her torso and at the same time drive the top portion (2), the latter being reclined forward in order to maintain its original position. This upper portion (2) can also be reclined and make up an extension, at no angle, of the lower part (1) of the backrest.

## Description

### SPECIFICATION

### OBJECT OF THE INVENTION

The present invention relates to a mechanism that has been especially designed to achieve an optimal degree of adjustment in reclining the backrest of a seat, in particular a seat for a motor vehicle, preferably a coach, which mechanism relies on a splitting of the said backrest into two portions, a top and a lower portion, the said mechanism allowing the said parts to be reclined separately and in synchrony.

The user of the seat is thus able to suit the backrest of the seat to new rest positions, suited both for total rest and for reading, watching the video screen whilst travelling and so forth.

### DESCRIPTION OF THE INVENTION

More specifically and in order to achieve the above, the starting point as aforesaid is two structures for the backrest, a top and a lower structure, hinged to each other, the lower structure being likewise hinged as is usually the case to the framework representing the cushion or seat as such.

The top structure of the backrest is further provided at the pin hinging the same to the lower structure, with a frontally projecting cam or articulated rod to which a transmission rod is in turn likewise hinged, running along the side and length of the lower backrest structure and split into two sectors that are linked through a central turning system which causes the said transmission rod sectors to be in turn hinged to the lower structure itself.

This transmission rod is at its lower end and with the assistance of a cranked articulated rod hinged to a base framework and is likewise hinged to a first gas spring established between the said articulated rod and the front portion of the base framework, whereas a second gas spring, parallel to the first spring, links the rear portion of the said structure to the lower end of the backrest, substantially beneath the swivel pin in the latter.

Control levers for the said gas spring, driven by push-buttons duly established to this end, allow both gas springs to be simultaneously released, so that only the lower structure of the backrest shall be tilted, whereas the top part shall stay in its initial position or angle to the vertical, or only the first gas spring to be released, in which case the lower structure of the backrest stays in place and a rearward pressure thereon allows the top structure to be folded.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
Figure 1.- )s a side elevation view of a vehicle seat structure fitted with the mechanism to adjust the re- ciination of the backrest, subject of the present invention, the assembly being shown in the forward use position.

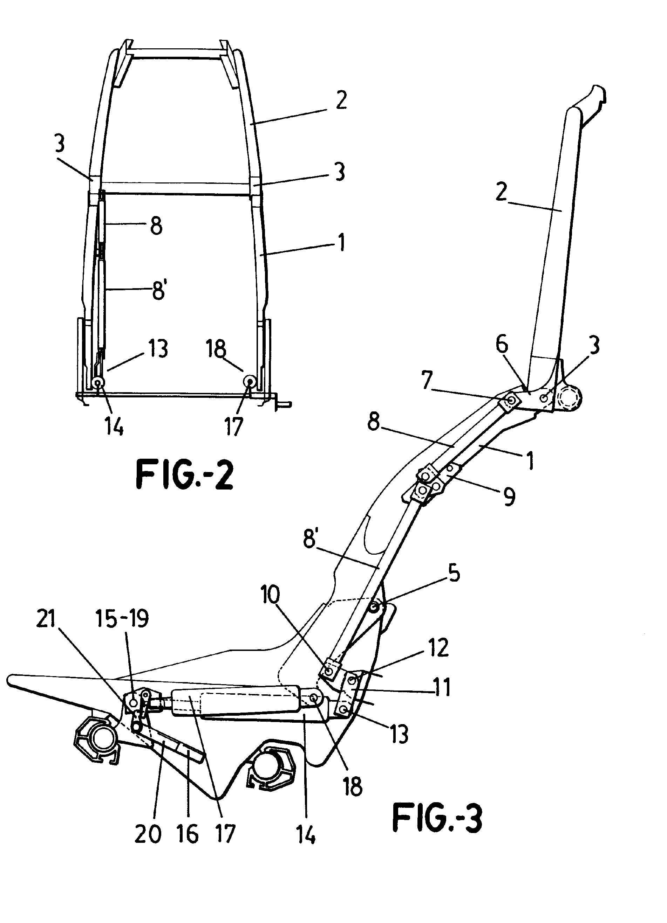

Figure 2.- Is a front elevation view of the assembly shown in the previous figure.
Figure 3.- Is a side elevation view similar to that of figure 1, in a position of reclination only for the lower half or structure of the backrest.
Figure 4.- Is finally and as in figures 1 and 3, the same assembly of these figures in a fully reclined position.

### PREFERRED EMBODIMENT OF THE INVENTION

The above figures show that the mechanism subject hereof is applicable to a vehicle seat the backrest of which defines two sectors, namely a lower sector or structure (1) and a top sector or structure (2), hinged to one another through side pins (3), the lower structure being respectively joined to the base framework (4) which is the seat as such by means of another cross pin (5).

Now then, the top structure (2) of the backrest is fitted at the side and at the bottom with a frontally projecting cam or articulated rod (6) the free end of which and by means of the hinge pin (7) is joined to a transmission rod (8) running along the side of the lower structure (1) of the backrest and in which two sectors (8-8') are defined, linked to one another through a central turning system (9) which establishes a multiple jointing of a sector in relation to the other of the transmission rod of both sectors with regard to the actual lower structure (1) of the backrest.

This transmission rod (8-8') is hinged through its lower end (10) to a cranked articulated rod (11) that is in turn hinged through its midpoint (12) to the lower framework (4) of the seat, its other end being linked through the articulated joint (13) to a gas spring (14) that extends between such articulated rod (11) and a jaw (15) which carries the mechanism transmitting the driving force and that is driven by means of the lever (16).

In addition to the gas spring (14) a second gas spring (17) is established to link the lower end (18) of the spring with a second jaw (19) located at the same level as the jaw (15) and that is in turn driven by another lever (20).

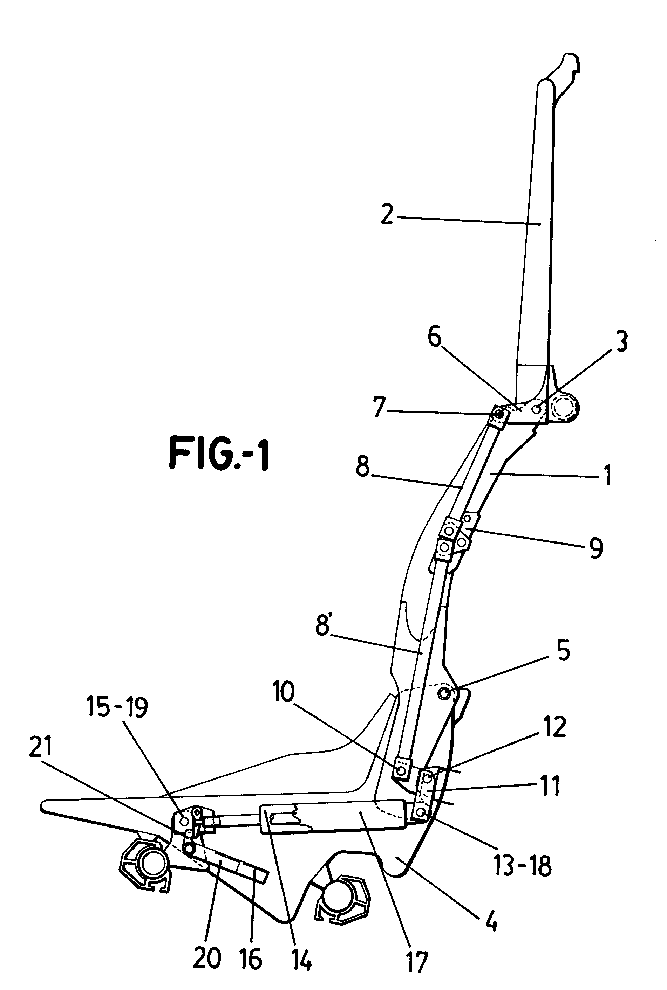

In accordance with this structure and from the forward limiting position of the assembly shown in figure 1, by means of a button or a control ergonomically positioned on the seat, thelever(16) is driven and the latter drives the cams (22), which release the gas springs (14) and (17). At this stage, if the passenger drives the backrest of the seat with h his or her back torso its lower structure (1) will be gradually tilted or reclined; at the same time, the transmission rod (8) will start to pull the hinge point (7) for the said rod is a part of the lower structure (1) and transmits through the central turning system (9) a force that causes the pins (3) to turn, so that as the lower structure (1) of the backrest is tilted backwards, the top structure (2) shall do so forwards, the latter keeping its angle to the vertical. It is therefore possible for the user of the seat to have the lower part of the trunk in a position of maximum recline and yet the top portion of the back in a forward position, holding the neck and the head in an upright position, which for instance allows easy and comfortable reading.

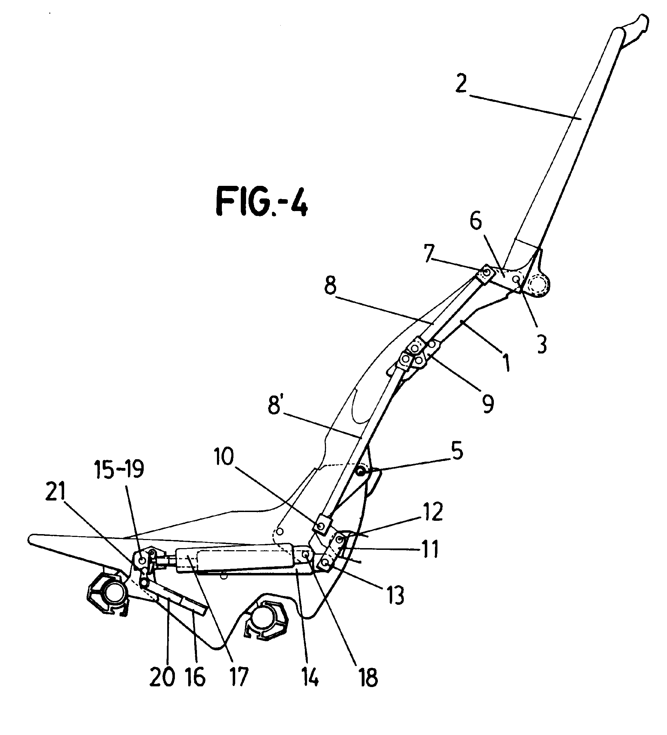

If at this position the lever (20) is driven the gas spring (14) will be released due to the action of the respective cam (22) and hence the transmission rod (8) will also be released, which position of freedom will also extend to the top structure (2) of the backrest, that can swing backwards separately, other than with the lower structure (1) when the user exerts some pressure with the top area of his or her back, the said top structure (2) being able to reach any swivel angle (2) up to the limiting angle shown in figure 4 and which constitutes the position of maximum recline of the whole assembly, or a position of total rest.

In order to return to the initial forward position, it will be sufficient to again drive the lever (16) to release the two gas springs (14) and (17), the driving force of which shall cause both structures (1) and (2) of the backrest to swing forward to reach the limiting position shown in figure 1.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1.- A mechanism for adjusting the reclination of a vehicle seat backrest, in particular of a seat in which a lower framework is established to constitute the seat as such and a seat is provided in which two structures are in turn established, a top and a lower structure, hinged to each other and the lower part hinged to the base framework, essentially characterised in comprising a pair of gas springs, of which one is hinged between the front area of the base framework and the lower end of the lower backrest structure, substantially below the pin hinging the said backrest to the seat as such, whereas the other gas spring, arranged substantially parallel to the first spring, is also hinged at one of its ends to the front area of the base framework, whereas its other end is hinged to a cranked articulated rod, hinged to the rear area of the base framework and likewise hinged to a transmission rod, which runs along the side of the lower backrest structure, and the lower end of which is also hinged to a cam or articulated rod which projects from the front of the top backrest structure, the said transmission rod being provided to be split into two sectors linked to each other through a central turning system that is in turn hinged to the middle area of the lower seat structure, and the said springs being fitted with two driving levers fitted with appropriate cams, being particular in that one of the said levers is used to simultaneously drive both gas springs, whereas the other lever only drives the gas spring associated to the transmission rod mounted on the side of the lower backrest structure, all in order to allow only the said lower backrest structure and optionally the top backrest structure to be tilted.
